Europäisches Patentamt

European Patent Office

Office européen des brevets

(19)

(11) Veröffentlichungsnummer: **0 198 171 B1**

(12) **EUROPÄISCHE PATENTSCHRIFT**

(45) Veröffentlichungstag der Patentschrift: **16.01.91**

(21) Anmeldenummer: **86101960.2**

(22) Anmeldetag: **15.02.86**

(51) Int. Cl.⁵: **B 01 J 2/28, C 01 B 31/14, C 10 L 5/14**

(54) **Mikrokügelchen aus Aktivkohle und Verfahren zu ihrer Herstellung.**

(30) Priorität: **21.03.85 DE 3510209**

(43) Veröffentlichungstag der Anmeldung:
**22.10.86 Patentblatt 86/43**

(45) Bekanntmachung des Hinweises auf die
Patenterteilung:
**16.01.91 Patentblatt 91/03**

(84) Benannte Vertragsstaaten:
**AT BE CH DE FR GB IT LI LU NL SE**

(56) Entgegenhaltungen:
DE-B-1 299 289
FR-A-2 215 461
FR-C- 854 313
US-A-4 051 098
US-A-4 081 370
US-A-4 169 051

CHEMICAL ABSTRACTS, Band 82, Nr. 2, 13.
Januar 1975, Seite 82, Zusammenfassung Nr.
5688h, Columbus, Ohio, US; & IN-A-132 613
(N.D. BHATIA) 22-06-1974

(73) Patentinhaber: **von Blücher, Hubert**
**Freytagstrasse 45**
**D-4000 Düsseldorf (DE)**
(73) Patentinhaber: **von Blücher, Hasso**
**Columbusstrasse 58**
**D-4000 Düsseldorf 1 (DE)**
(73) Patentinhaber: **de Ruiter, Ernest, Dr.**
**Höhenstrasse 57a**
**D-5090 Leverkusen 3 (DE)**

(72) Erfinder: **VON Blücher, Hubert**
**Freytagstrasse 45**
**D-4000 Düsseldorf (DE)**
Erfinder: **VON Blücher, Hasso**
**Columbusstrasse 58**
**D-4000 Düsseldorf 1 (DE)**
Erfinder: **DE Ruiter, Ernest, Dr.**
**Höhenstrasse 57a**
**D-5090 Leverkusen 3 (DE)**

(74) Vertreter: **Eggert, Hans-Gunther, Dr.**
**Räderscheidtstrasse 1**
**D-5000 Köln 41 (DE)**

Courier Press, Leamington Spa, England.

**Beschreibung**

Die Anwendung von Aktivkohle zur Reinigung von Flüssigkeiten oder Gasen ist allgemein bekannt. Eine ausführliche Darstellung wird im Buch von H. von Kienle und E. Bäder "Aktivkohle und ihre industrielle Anwendung", Ferdinand Enke Verlag, Stuttgart 1980 gegeben.

Für viele Zwecke ist die Verwendung pulverförmiger Aktivkohle nicht mögliche, so daß man auf Presslinge oder Formkohle ausweicht. Die Anwendung in Form von Presslingen, beispielsweise für pharmazeutische Zwecke, ist von untergeordneter Bedeutung.

Formkohlen zeichnen sich durch hohe Aktivität und gut Härte aus. Ihre regelmäßige, häufig stäbchenförmige Gestalt ist insbesondere für die Anwendung in Schüttfiltern vorteilhaft.

Formkohlen werden z.B. aus vermahlener Steinköhle und einem Pechbinder hergestellt. Die Mischung wird mittels eines Extruders zu Strängen gepresst, gegebenenfalls abgeteilt und die so erhaltenen Würstchen oder Zylinder werden dann geschwelt, d.h. carbonisiert, und aktiviert. Hierbei sind der Dimension nach unten verfahrenstechnisch bedingte Grenzen gesetzt, die bei einem Durchmesser von etwa einem Millimeter liegen.

Zur Herstellung kugelförmiger Teilchen, insbesondere von Mikrokügelchen, bedient man sich anderer Verfahren. Beispielsweise wird aus Bitumen über dessen Erweichungspunkt in einem damit nur begrenzt mischbaren Medium, z.B. Wasser, unter Druck eine Dispersion hergestellt, diese abgeschreckt, die erhaltenen Bitumenkügelchen mit einem geeigneten Lösungsmittel extrahiert, oxydiert, carbonisiert und schließlich aktiviert.

Eine Alternative der Herstellung von carbonisierten Kohlekügelchen aus Bitumen besteht darin, geschmolzenes Bitumen zu der gewünschten Tröpfchengröße zu zerstäuben und diese Tröpfchen mit einem inerten Gas durch eine auf 800 bis 1600°C aufgeheizte Zone zu schicken. Durch diese Behandlung wird zunächst die äußere Schicht der Tröpfchen carbonisiert und dann auch das Bitumen im Inneren.

Die so hergestellten Aktivköhlekügelchen haben eine harte Schale und einen etwas weicheren Kern. Es wurden Kugeldurchmesser von 0,1 bis 1 mm mit Schwerpunkt bei 0,2 bis 0,4 mm erhalten, jedoch sind hiervon abweichende Durchmesser durchaus erreichbar. Die Abriebgestigkeit ist dank der besonders harten Schale sehr hoch. Die inner Oberfläche beträgt etwa 600 bis 1500 m²/g, mit verhältnismäßig hohem Anteil an Mikroporen (10—15 · 10⁻¹⁰ m).

Eine andere Möglichkeit Aktivkohlekügelchen herzustellen, besteht darin, organische Kationenaustauscher im Wirbelbett rasch auf 600—700°C zu erhitzen und anschließend, z.B. mit Wasserdampf, zu aktivieren. Die Festigkeit der erhaltenen Adsorberkügelchen ist für die meisten Anwendungszwecke ausreichend, wenn auch etwas geringer als die des aus Bitumen hergestellten Materials.

Die US—A—4 051 098 beschreibt ein Verfahren zur Herstellung aktivkohlehaltiger Formteile bei dem bereits von Aktivkohle mit einer Teilchengröße bis zu 180 µm also bereits in der gleichen Größenordnung, die die erfindungsgemäß gewünschten Mikrokügelchen haben sollen, ausgegangen wird. Als Bindemittel dienen ggf. modifizierte Phenolharze, die beim Trocknen aushärten. Das daraus geformte Granulat hat einen Durchmesser von 10 bis 12 mm und es wird außerdem noch bei 900°C carbonisiert und dann aktiviert. Das Wesentliche bei dieser Entgegenhaltung ist die Wahl der modifizierten Phenolformaldehydharze als Bindemittel, um gute mechanische Festigkeit ohne Verschlechterung der Adsorptionskapazität zu erhalten, weil Phenolharze bekanntlich gut carbonisieren. Angesichts der Größe des Ausgangsmaterials und der gewünschten Formteile macht die Formgebung keine Schwierigkeiten. Hinweise zur Lösung des Problems, Mikrokügelchen der üblichen Größe von 0,2 bis 0,6 mm aus Pulverkohle herzustellen, lassen sich diesem Dokument nicht entnehmen.

Der Erfindung liegt die Aufgabe zugrunde, auf einfachere Weise kugelförmige oder annähernd kugelförmige Teilchen mit hohen Aktivkohleanteil und einstellbarer Größe zwischen 0,1 und 0,7 mm bei enger Korngrößenverteilung mit einer inneren Oberfläche von 600 bis 2000 m²/g herzustellen.

Die Lösung dieser Aufgabe besteht darin, Mikrokügelchen aus Aktivkohleteilchen, einer Größe unter 50 µm, insbesondere von 1 bis 10 µm, aufzubauen, die mit 15—30 Gew.% eines wasserunlöslichen Polyurethans, Acrylats oder Synthesekautschuk gebunden sind.

Das ist erfindungsgemäß einmal dadurch möglich, daß man Aktivkohleteilchen einer Größe unter 100 µm mit der Dispersion eines wasserunlöslichen Kunstharzes zu einem innigen Gemisch verknetet, dieses durch eine Siebplatte mit Öffnungen presst, die der Größe der gewünschten Mikrokügelchen entsprechen, abpudert und granuliert und die erhaltenen Mikrokügelchen trocknet. Bei Verwendung von härtbaren Kunstharzen kann sich eine Härtung anschließen.

Eine andere Möglichkeit zur Herstellung der erfindungsgemäßen Mikrokügelchen aus Aktivkohle, in denen Aktivkohleteilchen einer Größe unter 100 µm mit einem wasserunlöslichen Kunstharz gebunden sind, besteht erfindungsgemäß darin, daß man in einer mit einem Wirbler ausgerüsteten Pelletiervorrichtung Aktivkohleteilchen einer Größe unter 100 µm vorlegt und während des Betriebs nach und nach eine wässrige Dispersion des wasserunlöslichen Kunstharzes zulaufen läßt, bis sich Mikrokügelchen der gewünschten Größe gebildet haben, diese unmittelbar nach Abstellen des Wirblers bei weiterlaufender Pelletiervorrichtung abpudert, anschließend trocknet, klassiert und gegebenenfalls metallisiert.

Die beiden beschriebenen Verfahren ergeben Mikrokügelchen mit Durchmessern über 0,1 mm, mit Schwerpunkt um 0,3 bis 0,6 mm. Für spezielle Anwendungen können auch Mikrokügelchen, die kleiner als 0,1 mm sind, wünschensert sein. Für diesen besonderen Fall eignet sich die Sprühtrocknung, obschon hiermit auch größere Kügelchen hergestellt werden können. Bei diesem Verfahren wird in einem Sprühturm eine im wesentlichen aus fein vermahlener Aktivkohle, Binderdispersion und Wasser bestehende Flotte aus Düsen versprüht und die Tröpfchen werden durch einen Gegenstrom heißer Luft getrocknet wobei die Temperatur der Tröpfchen oder der daraus entstehenden Mikrokügelchen 120°C nicht übersteigt. Durch den während der Trocknung auftretenden starken inneren Druck entsteht im Innern der Kugel einer kleiner Hohlraum, der meist 10—20% des Gesamtvolumens ausmacht. Da das Innere der Kugel an Adsorptionsvorgängen nur mit Verzögerung teilnimmt (langsame Diffusion des Adsorbats aus den äußeren Schichten in den Kern), ist theoretisch die Hohlkugel bei gleicher Masse der Vollkugel überlegen.

Erfindungsgemäß wird von Aktivkohlepulver ausgegangen, dessen Teilchen kleiner als 100 µm, vorzugsweise kleiner als 50 µm sind. Derartige Pulverkohle wird durch sehr feines Vermahlen hergestellt und hat eine Teilchengröße von 0,1—50 µm. vorzugsweise 1—10 µm. Mit Strahlmühlen läßt sich beispielsweise Aktivkohle auf Partikelgrößen von 95% unter 3 µm bringen. Bie einem anderen Handelsprodukt sind z.B. 98% kleiner als 62 µm und 65% kleiner als 22 µm. Solche Aktivkohlen können vorherbestimmbare Porengrößen bei sehr hoher innerer Oberfläche bis zu 2000 m²/g besitzen.

Weil pulverförmige Aktivkohle meist aus pflanzlichen Rohstoffen hergestellt wird, haben auch die fein gemahlenen Teilchen, wie unter dem Mikroskop erkennbar ist, meist eine scharfkantige Struktur. Deshalb sind trotz des Schmiereffekts des wasserunlöslichen Kunstharzes der eingesetzten Dispersion verhältnismäßig hohe Wassermengen erforderlich, um die Pulverkohle mit der Dispersion zu einem innigen Gemisch zu verkneten, das sich dann durch Siebe, Lochplatten oder dergleichen auspressen läßt. Das gescheiht beispielsweise mit Doppelschnecken-Extrudern, deren Schnecken am Ende von siebförmigen Mänteln umgeben sind. Eine andere Möglichkeit besteht in der Anordnung einer Siebplatte am Ende üblicher Mischextruder. In beiden Fällen soll der Durchmesser der Austrittsöffnungen für das innige Gemisch aus Pulverkohle und Kunstharzdispersion 0,1—1 mm, vorzugsweise 0,3 bis 0,7 mm, betragen. Die austretende Masse hat dann die Form feiner Stränge, die bei richtiger Einstellung der Konsistenz von selbst zerbröckeln.

Bei dem Versuch, die so erhaltenen "Würstchen" bzw. Zylinderchen mit bekannten Granuliervorrichtungen in die Kugelform zu überführen, gelingt es aber nicht Kügelchen vom ungefähren Durchmesser der extrudierten Teilen zu erhalten, sondern es entstehen durch Agglomeration wesentlich größere Kügelchen von sehr unterschiedlichem Durchmesser, der von einigen Millimetern bis zu einem Zentimeter oder darüber reichen kann. Auch solche Kugeln können nach dem Trocknen und Absieben auf die jeweils gewünschte Korngröße für bestimmte Anwendungszwecke brauchbar sein, aber auf diese Weise läßt sich nicht das Verfahrensziel verwirklichen, Mikrokügelchen herzustellen.

Der Versuch, die mit der Kunstharzdispersion eingebrachte Wassermenge zu reduzieren, um ein trockneres Extrudat zu erhalten, das beim Pelletisieren nicht zu größeren Agglomeraten zusammenklebt, findet sehr rasch eine Grenze, weil sich dann das Gemisch nicht mehr extrudieren läßt. Die für die Verformung des Extrudats zu Mikrokügelchen erforderliche Konsistenz, der notwendige Bindemittelanteil im Endprodukt und die für das Extrudieren erforderliche Geschmeidigkeit der Masse, einschließlich des Wassergehalts, sind nur schwer miteinander in Einklang zu bringen.

Es wurde nun überraschenderweise gefunden, daß es gelingt, aus den sehr feinen Strängen des innigen Gemisches von Aktivkohlepulver mit der Kunstharzdispersion Mikrokügelchen von etwa gleichem Durchmesser wie dem der Stränge zu erhalten, wenn die extrudierten Stränge zwischen ihrem Austritt aus der Siebplatte und der Aufgabe auf die Granulier- oder Pelletisiervorrichtung mit einem feinen Pulver bepudert werden. Dabei handelt es sich vorzugsweise um Graphit oder die gleiche Pulverkohle, die auch erfindungsgemäß eingesetzt wird. Es können aber auch Pulver von Substanzen verwendet werden, die zur Modifizierung der Aktivkohle erwünscht sind, wie z.B. Bestandteile von Flammschutzmitteln, insbesondere Antimontrioxid, Metallpulver, (z.B. Al, Ni) oder andere absorbierende Materialien, insbesondere Kieselsäure-Xerogele, Metalloxide und -hydroxide, insbesondere Aluminiumoxid und -hydroxide, oder Molekularsiebe.

Das Abpudern kann auf dem Granulierteller bzw. der Pelletisiervorrichtung fortgesetzt werden. Die Menge des zum Abpudern benutzten Pulvers wird zweckmäßig so bemessen, daß ein späteres Absieben von Feinteilen nicht erforderlich ist. In der Regel genügen wenige Gewichtsprozent, bezogen auf die extrudierten Stränge. In jedem Fall gelingt es auf diese Weise mit den zur Herstellung entsprechend feiner Kügelchen, z.B. für die pharmazeutische Industrie üblichen Vorrichtungen, insbesondere dem sogenannten Marumerzier, Mikrokügelchen eines Durchmessers von 0,1 bis 1 mm, insbesondere 0,3 bis 0,7 mm, zu erhalten. Sie können anschließend, z.B. in einem Wirbelbett, getrocknet und ausgehärtet werden.

Die oben geschilderten Schwierigkeiten der Verarbeitung der extrudierten Teilchen aus dem innigen Gemisch von Aktivkohlepulver mit der Kunstharzdispersion in bekannten Pelletier- oder Granuliervorrichtungen treten verstärkt bei dem Versuch auf, das Aktivkohlepulver direkt durch Zugabe von Binderlatex in Mikrokügelchen zu überführen. Selbst mit den Vorrichtungen, mit denen sich aus anderen Pulvern Korngrößen unter 1 mm erhalten lassen, wie z.B. Pelletier- oder Granuliermischern, ließen sich die angestrebten Kugeldurchmesser nicht erreichen, sondern es wurde bei beträchtlichem Feinanteil nur Granulat mit Durchmessern über 2 mm gebildet. Auch nachdem der Mischer mit einem rotierenden Wirblerwerkzeug—auch Wirbler oder Schläger genannt—versehen wurde, ließen sich zwar die gewünschten kleinen Kügelchen im Betrieb erhalten, sobald aber der Wirbler abgestellt wurde, was notgedrungen mindestens vor dem Entleeren geschehen muß, bilden sich wieder größere Kugeln und brombeerartige Aggregate aus kleineren Kügelchen. Der brauchbare Anteil lag nur zwischen 5 und 35%, je nach Art der Kohle und des Binders. Zusätze von Pelletierhilfsmitteln, wie z.B. von Bentoniten oder feinsten Zementsorten, verbesserten zwar etwas das Gesamtbild, störten aber die Naßfestigkeit und die adsorptiven Eigenschaften des Aktivkohlegranulats. Erst das Abpudern unmittelbar nach Abstellen des Wirblers bei weiterlaufender Pelletiervorrichtung entsprechend dem erfindungsgemäßen Verfahren schaffte hier Abilfe. Zum Abpudern dienen hier die gleichen Pulver, wie bei dem oben beschriebenen alternativen Verfahren zur Herstellung der erfindungsgemäßen Mikrokügelchen aus Aktivkohle. Auch die anschließenden Verfahrensschritte des Trocknens, Klassifizierens und gegebenenfalls Metallisierens erfolgen zweckmäßig ebenso wie bei dem alternativen Verfahren nach dem Entleeren des Pelletiermischers in dafür geeigneten und dem Fachmann bekannten Vorrichtungen.

Mit den erfindungsgemäßen Verfahren lassen sich Mikrokügelchen der genannten Durchmesser mit einem sehr engen Kornverteilungsspektrum herstellen, die für die meisten Anwendungszwecke nach Abtrennung geringer Mengen von Über- oder Unterkorn ohne weiteres Sieben oder Sichten direkt eingesetzt werden können. Ihr Kunstharzanteil, berechnet als Trockensubstanz, beträgt etwa 10—100, insbesondere 15—30 Gewichtsprozent, bezogen auf die Menge trocknere Aktivkohle.

Obgleich aus der Pulverkohle unter Zuhilfenahme des wasserunlöslichen Kunstharzes Mikrokügelchen hergestellt werden, die etwa den zehn- bis hundertfachen Durchmesser der Aktivkohleteilchen der Pulverkohle besitzen, zeichnen sich die Mikrokügelchen doch durch eine innere Oberfläche aus, die, verglichen mit der der eingesetzten Pulverkohle, kaum vermindert ist und je nach Wahl der verwendeten Aktivkohle 600—2000 m²/g beträgt.

Zu diesem Ergebnis tragen auch wesentlich die wasserunlöslichen Kunstharze bei, die nach den erfindungsgemäßen Verfahren als wässrige Dispersion zum Binden der Pulverkohle dienen. Das wasserunlösliche Kunstharz ist vorzugsweise ein Elastomeres, Thermoplast oder Duroplast auf Basis von Polymeren, wie sie z.B. für das Inkapsulieren von Adsorberteilen aus der DE—B—33 04 349 bekannt sind und die eine selektive Durchlässigkeit für die zu adsorbierenden Substanzen, z.B. Kampfstoffe, besitzen, aber für Schweiß, Waschmittel, Öle und Fette undurchlässig sind. Für die Zwecke der Erfindung geeignete Kunststoffdispersionen sind z.B. Polyurethanlatices, wie Impranil DLN (Bayer), Acrylatlatices, wie die Acronale (BASF) und Synthesekautschuk-Latices, wie Neoprene (Du Pont).

Um eine Phasentrennung beim Extrudieren, d.h. Herauspressen des Wassers zu verhindern, können die Mischung Quellungs- oder Verdickungsmittel zugesetzt werden (s. Römpp, Chemielexikon).

Im Hinblick auf den gewünschten Verwendungszweck können den erfindungsgemäßen Mikrokügelchen aus Aktivkohle die verschiedensten Substanzen beigemischt werden. Diese können je nach ihrer chemischen Natur und Verträglichkeit als Pulver der Puderkohle schon vor Zugabe der Bindemitteldispersion zugesetzt werden, sie können zum Abpudern dienen oder sie können der Kunstharzdispersion einverleibt werden. Bekannte Flammschutzmittel bestehen beispielsweise aus feinverteiltem Antimontrioxid in Kombination mit Bromverbindungen, z.B. Decabromdiphenyläther. Hier kann letzterer schon in dem Kunstharz der Dispersion vorliegen, während das Antimontrioxid ebenso wie die Aktivkohleteilchen mit der wässrigen Dispersion des wasserunlöslichen Kunstharzes verarbeitet oder als Abpuderungsmittel benutzt wird. Entsprechendes gilt für andere bekannte pulverförmige Modifizierungsmittel oder die schon oben erwähnten adsorbierenden Materialien.

Die Makro- und Mesoporen der Aktivkohle können mit Additiven, wie Schwermetallkatalysatoren, flammhemmenden, antibakteriellen oder fungiziden Substanzen beladen sein.

Das Beladen der Aktivkohle mit Enzymen, insbesondere vor dem Hinzufügen des Binders, führt zu einer Formkohle mit hoher enzymatischer Wirksamkeit. Die großen Moleküle der Enzyme können bis in die Mesoporen, in Grenzfällen auch bis in die größten Mikroporen eindringen und werden dort durch die Binder-Makromoleküle eingeschlossen, sind aber für kleinere Moleküle noch zugänglich. Die durch die Adsorption an der Aktivkohle bedingte Konzentrationserhöhung der Reagentien bewirkt eine hohe Reaktionsgeschwindigkeit. Schließlich ist in Aktivkohle praktisch immer das für viele enzymatische Reaktionen benötigte Wasser in ausreichender Menge vorhanden. Aber auch spezielle Katalysatoren, wie sie z.B. für die Beseitigung von Gerüchen (Darmgase von Kolostomiepatienten) vorgeschlagen werden, lassen sich bei der Herstellung der erfindungsgemäßen Formkohle zufügen. Man erhält eine für die Blutwäsche geeignete Kohle, wenn man bei der Herstellung ein Aktikoagulans (z.B. Acetylsalicylsäure) bzw. Zirkonverbindungen (zur Fixierung von Phosphaten) einbaut.

Für besondere Zwecke kann es nützliche sein, die Kügelchen mit einer porösen bzw. schwammigen Metallschicht zum umhüllen. Das kann mit bekannten chemischen oder elektrochemischen Verfahren geschehen. So wurde gemäß Beispiel 1 der EP—B— 10 711 eine etwa 20 µm starke Nickelschicht aufgetragen. Die Adsorptionskinetik wurde dadurch nur unwesentlich beeinflusst. Bei der nur sehr langsamen Desorption wurden hingegen chemische Gifte zerstört.

In einigen Fällen werden Formkohlen mit Metallsalzen imprägniert, wenn z.B. die reine Adsorption nicht ausreicht (Gasmaskenfilter) oder besondere katalytische Effekte erwünscht sind. Allerdings wird ein beträchtlicher Teil der Salze in Oberflächennähe abgelagert, was sowohl die Adsorption selbst wie die Wirkung der Salze beeinträchtigt. Bei dem erfindungsgemäßen Verfahren ist es möglich, Metallsalze schon in der wässrigen Phase der Kunstharzdispersion zu lösen, so daß sie sehr gleichmäßig in den Aktivkohleteilchen verteilt werden.

Die erfindungsgemäßen Verfahren haben also den entscheidenden Vorteil, daß die Modifizierung durch empfindliche chemische oder biologische Substanzen mit der pulverförmigen Aktivkohle und damit vor der mit der Formgebung zu den Mikrokügelchen verbundenen Inkapsulierung erfolgen kann. Diese Maßnahmen sind bei nur mäßig erhöhten Temperaturen durchführbar, durch die diese Substanzen, z.B. Enzyme, nicht geschädigt werden.

Die erfindungsgemäßen Mikrokügelchen aus Aktivkohle können überall dort eingesetzt werden, wo man auch bisher derartige, wenn auch auf anderem Wege hergestellte feine Formkohle eingesetzt hat, z.B. zum Bestücken von Schüttfiltern. Durch ihre Symmetrie vertragen die erfindungsgemäßen Mikrokügelchen aus Aktivkohle mechanische Beanspruchung besser als andere Formen und sie haben das größe Volumgen/Oberflächenverhältnis proportional zum Durchmesser. Das ist besonders wichtig für die Herstellung flexibler Flächenfilter, z.B. für Luftreinigungsgeräte oder Schutzanzüge gegen chemische Kampfstoffe. Die bevorzugten Kugeldurchmesser von 0,3 bis 0,4 mm bei einer möglichst nur punktförmigen Fixierung an dem flexiblen Trägermaterial stellen den optimalen Kompromiss zwischen Adsorptionskinetik (proportional zur Oberfläche) und Kapazität (proportional zum Volumen) dar.

Beispiel 1

An den folgenden Komponenten wurde in einem Kneter eine homogene Masse hergestellt:

| | |
|---|---|
| —vermahlene Aktivkohle 95%=5 µm, Wassergehalt 25 Gew.% | 6350 g |
| —Polyurethandispersion Trockensubstanzgehalt 45% (Impranil DLN) | 4650 g |
| —Wasser | 2570 g |
| —Gleitmittel (Polyäthylenoxidlösung) M 740/1 (Plate) | 600 g |

Diese Masse wurde in einem Extruder durch eine Siebplatte mit Löchern von 0,5 mm Durchmesser zu Strängen gepresst. Diese Stränge wurden mit 2% Aktivkohlepulver, bezogen auf das Gesamtgewicht, abgepudert und in einem Marumerizer zu Kügelchen geformt. Diese wurden in einer Trommel mit einem Heißluftstrom getrocknet. Der Anteil von Mikrokügelchen mit einem Durchmesser von 280—630 µm betrug etwa 90%.

Beispiel 2

In einem handelsüblichen Pelletiermischer mit einem Nutzinhalt von 150 l mit im Ihrzeigersinn drehenden, geneigt angeordneten Mischgutbehälter, rotierendem Wirblerwerkzeug und Materialumlenker wurden 50 kg feinst vermahlener Aktivkohle einer durchschnittlichen inneren Oberfläche von 1400 m²/g der folgenden Konverteilung vorgelegt:

| | |
|---|---|
| bis 3 µm | 6 Summen-Prozent |
| bis 4 µm | 14 Summen-Prozent |
| bis 8 µm | 33 Summen-Prozent |
| bis 11 µm | 42 Summen-Prozent |
| bis 16 µm | 53 Summen-Prozent |
| bis 22 µm | 65 Summen-Prozent |
| bis 31 µm | 77 Summen-Prozent |
| bis 44 µm | 89 Summen-Prozent |
| bis 62 µm | 98 Summen-Prozent |
| bis 88 µm | 100 Summen-Prozent |

Der Wassergehalt dieser aktiven Pulverkohle betrug 25 Gewichtsprozent. Verteilt über einen Zeitraum von 5 Minuten wurden 35 kg einer Acrylat-Dispersion mit einem Trockensubstanzgehalt von 50% zugegeben. Nach Abstellen des Wirblers wurden in den weiterdrehenden Mischgutbehälter noch 1 kg Aktivkohlepulver als Abpuderungsmittel zugesetzt. Die so erhaltenen Mikrokügelchen wurden in einem Trommeltrockner getrocknet. Durch Absieben wurden dann 39 kg der getrockneten Mikrokügelchen eines Durchmessers von 0,1 bis 0,6 mm entsprechend einer Ausbeute von 75% erhalten. Die innere Oberfläche dieses Produktes betrug immer noch 900 m²/g. Der Feinanteil kann mit frischer pulverförmiger Aktivkohle bei der nächsten Charge wieder eingesetzt werden.

Beispiel 3

In einer handelsüblichen Anlage für Sprühtrocknung mit einer Verdampfungskapazität von 200 kg Wasser pro Stunde wurde in einer wässrigen Acrylatdispersion aufgeschlemmtes Aktivkohlepulver wie in Beispiel 2 versprüht. Binder und Kohle und deren Verhältnis waren auch die gleichen, wie im Beispiel 2, jedoch wurde zusätzliches Wasser zugefügt, um eine Viskosität von ca. 1000 cP zu erreichen. Die Heißlufttemperatur betrug ca. 400°C, der mittlere Weg der Tröpfchen ca. 10 m und die Kontaktzeit ca. 15 sec. Es wurden bis zu 75% Kugeln (bezogen auf Trockensubstanz) im Bereich von 0,2—0,5 mm erhalten. Die Temperatur der Kügelchen blieb unter 100°C. Die Aktivität war mit jener der Kugeln aus Beispiel 1 und 2 absolut vergleichbar.

**Patentansprüche**

1. Mikrokügelchen aus Aktivkohle, die einen Durchmesser von 0,1 bis 0,7 mm und eine innere Oberfläche von 600 bis 2000 m$^2$/g haben, dadurch gekennzeichnet, daß sie aus Aktivkohlenteilchen einer Größe unter 50 µm, insbesondere von 1 bis 10 µm aufgebaut sind, die mit 15 bis 30 Gew.% eines wasserunlöslichen Polyurethans, Acrylats oder Synthesekautschuk gebunden sind.

2. Mikrokügelchen nach Anspruch 1, dadurch gekennzeichnet, daß sie Enzyme, Metallverbindungen, Flammschutzmittel- oder Dekontaminierungsmittel enthalten.

3. Mikrokügelchen nach Anspruch 1 oder 2, dadurch gekennzeichnet, daß sie mit einer porösen Metallschicht überzogen sind.

4. Mikrokügelchen nach einem der Ansprüche 1 bis 3, dadurch gekennzeichnet, daß sie im Inneren hohl sind.

5. Mikrokügelchen nach einem der Ansprüche 1 bis 4, dadurch gekennzeichnet, daß der innere Hohlraum 10 bis 20% des Gesamtvolumens ausmacht.

6. Verfahren zur Herstellung von Mikrokügelchen aus Aktivkohle nach einem oder mehreren der Ansprüche 1 bis 3, dadurch gekennzeichnet, daß man gemahlene Aktivkohle einer Teilchengröße unter 50 µm, insbesondere von 1 bis 10 µm, mit einem Polyurethan-, Acrylat- oder Synthesekautschuk-Latex zu einem innigen Gemisch verknetet, dieses durch eine Siebplatte mit Öffnungen preßt, die der Größe der gewünschten Mikrokügelchen entsprechen, die extrudierten Stränge unmittelbar nach ihrem Austritt aus der Siebplatte mit einem feinen Pulver bepudert und auf üblichen Granulier- oder Pellitisiervorrichtungen zu den Mikrokügelchen granuliert und diese anschließend trocknet und gegebenenfalls metallisiert.

7. Verfharen zur herstellung von Mikrokügelchen aus Aktivkohle nach einem oder mehreren der Ansprüche 1 bis 3, dadurch gekennzeichnet, daß man in einer mit einem Wirbler ausgerüsteten Pellitiervorrichtung Aktivkohleteilchen einer Größe unter 50 µm, insbesondere von 1 bis 10 µm, vorlegt und während des Betriebs nach und nach einen Polyurethan-, Acrylat- oder Synthesekautschuk-Latex zulaufen läßt, bis sich Mikrokügelchen der gewünschten Größe gebildet haben, diese unmittelbar nach Abstellen des wirblers bei weiterlaufender Pellitiervorrichtung mit einem feinen Pulver abpudert, anschließend trocknet, klassiert und ggf. metallisiert.

8. Verfahren nach Anspruch 6 oder 7, dadurch gekennzeichnet, daß das Abpudern mit Graphit oder Aktivkohlepulver einer Teilchengröße von 1 bis 10 µm erfolgt.

9. Verfahren nach einem der Ansprüche 6 bis 8, dadurch gekennzeichnet, daß das Abpudern mit pulverförmigen Flammschutzmitteln erfolgt.

10. Verfahren nach einem der Ansprüche 6 bis 9, dadurch gekennzeichnet, daß das Abpudern mit Metallpulvern erfolgt.

11. Verfahren zur Herstellung von Mikrokügelchen aus Aktivkohle nach einem oder mehreren der Ansprüche 1 bis 5, dadurch gekennzeichnet, daß man Aktivkohle einer überwiegenden Teilchengröße unter 20 µm gleichmäßig in einer wässrigen Dispersion eines wasserunlöslichen Kunstharzes verteilt und das flüssige bis breiförmige Gemisch einer Sprühtrocknung unter Bedingungen unterwirft, bei denen die Temperatur der Tröpfchen oder der daraus entstehenden Mikrokügelchen 120°C nicht übersteigt.

12. Verwendung von Mikrokügelchen nach einem der mehreren der Ansprüche 1 bis 5 für flexible Flächenfilter, insbesondere in Schutzanzügen gegen chemische Kampfstoffe.

13. Verwendung von Mikrokügelchen nach einem oder mehreren der Ansprüche 1 bis 5 für Luftreinigungsgeräte.

**Revendications**

1. Microsphères de charbon actif, qui ont un diamètre de 0,1 à 0,7 mm et une surface interne de 600 à 2000 m$^2$/g, caractérisées en ce qu'elles sont constituées de particules de charbon actif de dimension inférieure à 50 µm et notamment de 1 à 10 µm, qui sont liées avec 15 à 30% en poids d'un polyuréthanne insoluble dans l'eau, d'un acrylate ou d'un caoutchouc de synthèse.

2. Microsphères suivant la revendication 1, caractérisées en ce qu'elles contiennent des enzymes, des composés métalliques, des agents d'ignifugation et des agents de décontamination.

3. Microsphères suivant la revendication 1 ou 2, caractérisées en ce qu'elles sont revêtues d'une couche métallique poreuse.

4. Microsphères suivant l'une des revendications 1 à 3, caractérisées en ce que leur intérieur est creux.

5. Microsphères suivant l'une des revendications 1 à 4, caractérisées en ce que la cavité intérieure constitue 10 à 20% du volume total.

6. Procédé de production de microsphères de charbon actif selon une ou plusieurs des revendications 1 à 3, caractérisé en ce qu'on malaxe du charbon actif en particules de diamètre inférieur à 50 µm,

notamment compris entre 1 et 10 µm, avec un latex de polyuréthanne, d'acrylate ou de caoutchouc synthétique jusqu'à l'obtention d'un mélange intime, on presse ce mélange à travers une plaque perforée, dont les ouvertures correspondent au diamètre des microsphères désirées, on poudre avec une poudre fine les cordons extrudés immédiatement après leur sortie de la plaque perforée et on les granule sur des dispositifs classiques de formation de granulés ou de pastilles en les microsphères que l'on sèche ensuite et que l'on métallise le cas échéant.

7. Procédé de production de microsphères de charbon actif selon une ou plusieurs des revendications 1 à 3, caractérisé en ce qu'on charge préalablement dans un dispositif de formation de pastilles équipé d'un cyclone, des particules de charbon actif de diamètre inférieur à 50 µm, notamment de 1 à 10 µm, et on fait arriver progressivement pendant le fonctionnement un latex de polyuréthanne, d'acrylate ou de caoutchouc de synthèse jusqu'à ce que des microsphères du diamètre désiré se soient formées, on poudre ces dernières d'une poudre fine immédiatement après l'arrêt du cyclone cependant que le dispositif de formation de pastilles continue de fonctionner, puis on les sèche, on les classe et le cas échéant on les métallise.

8. Procédé suivant la revendication 6 ou 7, caractérisé en ce que le poudrage est effectué avec du graphite ou du charbon actif en poudre présentant un diamètre de particules de 1 à 10 µm.

9. Procédé suivant l'une des revendications 6 à 8, caractérisé en ce que le poudrage est effectué avec des agents d'ignifugation en poudre.

10. Procédé suivant l'une des revendications 6 à 9, caractérisé en ce que le poudrage est effectué avec des poudres métalliques.

11. Procédé de production de microsphères de charbon actif suivant une ou plusieurs des revendications 1 à 5, caractérisé en ce qu'on répartit uniformément du charbon actif ayant principalement des diamètres de particules inférieures à 20 µm dans une dispersion aqueuse d'une résine synthétique insoluble dans l'eau et on expose le mélange liquide ou en bouillie à un séchage par pulvérisation dans des conditions dans lesquelles la température des gouttelettes ou des microsphères produites à partir d'elles ne dépasse 120°C.

12. Utilisation de microsphères suivant une ou plusieurs des revendications 1 à 5, des filtres flexibles à surface, notamment dans des vêtements de protection contre des substances chimiques de combat.

13. Utilisation de microsphères suivant une ou plusieurs des revendications 1 à 5 pour des appareils d'épuration d'air.

## Claims

1. Microspheres of activated carbon which have a diameter of 0.1 to 0.7 mm and an internal surface area of 600 to 2000 m²/g, characterised in that they are constructed of activated carbon particles of a size of below 50 µm, in particular of 1 to 10 µm, which are bonded with 15 to 30% by weight of a water-insoluble polyurethane, acrylate or synthetic rubber.

2. Microspheres according to Claim 1, characterised in that they contain enzymes, metal compounds, flame protection agents or decontamination agents.

3. Microspheres according to Claim 1 or 2, characterised in that they are coated with a porous metal layer.

4. Microspheres according to one of Claims 1 to 3, characterised in that they are hollow inside.

5. Microspheres according to one of Claims 1 to 4, characterised in that the internal cavity is 10 to 20% of the total volume.

6. Process for producing microspheres from activated carbon according to one or more of Claims 1 to 3, characterised in that ground activated carbon having a particle size of below 50 µm, in particular of 1 to 10 µm, is kneaded with a polyurethane, acrylate or synthetic rubber latex to form a homogenous mixture, said mixture is pressed through a sieve plate with openings which correspond to the size of the desired microspheres, the extruded strands are powdered with a fine powder immediately after leaving the sieve plate and are granulated to form the microspheres on conventional granulating or pelletising devices and said microspheres are then dried and optionally metallised.

7. Process for producing microspheres of activated carbon according to one or more of Claims 1 to 3, characterised in that activated carbon particles of a size below 50 µm, in particular of 1 to 10 µm, are placed in a pelletising device equipped with a fluidiser and during operation a polyurethane, acrylate or synthetic rubber latex is gradually allowed to run in until microspheres of the desired size have formed, said microspheres are powdered with a fine powder immediately after the fluidiser has been switched off and while the pelletising device continues to run, are then dried, graded and optionally metallised.

8. Process according to Claim 6 or 7, characterised in that the powdering takes place with graphite or activated carbon powder having a particle size of 1 to 10 µm.

9. Process according to one of Claims 6 to 8, characterised in that the powdering takes place with powdered flame protection agents.

10. Process according to one of Claims 6 to 9, characterised in that the powdering takes place with metal powders.

11. Process for producing microspheres from activated carbon according to one or more of Claims 1 to 5, characterised in that activated carbon having a predominant particle size of below 20 µm is evenly

distributed in an aqueous dispersion of a water-insoluble synthetic resin and that the liquid to paste-like mixture is subjected to spray drying under conditions at which the temperature of the droplets or the microspheres resulting therefrom does not exceed 120°C.

12. Use of microspheres according to one or more of Claims 1 to 5 for flexible screen cloth filters, in particular in clothing protecting against chemical warfare agents.

13. Use of microspheres according to one or more of Claims 1 to 5 for air purifying apparatus.